# EUROPÄISCHE PATENTSCHRIFT

(11) **EP 0 969 222 B1**
(45) Veröffentlichungstag und Bekanntmachung des Hinweises auf die Patenterteilung: **14.01.2004**
(21) Anmeldenummer: 99112045.2
(22) Anmeldetag: 22.06.1999
(51) Int. Cl.: F16F 9/04, B29C 65/48

(54) **Abstützeinrichtung für ein Verbindungsteil und Verfahren zur Herstellung der Abstützeinrichtung**
Supporting arrangement for a connecting device and manufacturing process therefor
Arrangement de support pour dispositif de connexion et sa procédure de fabrication

(30) Priorität: 01.07.1998 DE 19829362
(43) Veröffentlichungstag der Anmeldung: 05.01.2000
(73) Patentinhaber: Bayerische Motoren Werke Aktiengesellschaft, 80788 München (DE); PHOENIX AKTIENGESELLSCHAFT, 21079 Hamburg (DE)
(72) Erfinder: Joseph, Adrian, 85276 Pfaffenhofen (DE); Sonnak, Ulrich, 21075 Hamburg (DE)

(56) Entgegenhaltungen:
- EP-A- 0 289 831
- DE-C- 19 522 459
- GB-A- 2 127 938
- US-A- 4 095 825
- US-A- 4 561 670
- US-A- 5 370 426
- US-A- 5 607 035

## Beschreibung

Die Erfindung betrifft ein Verfahren zum luftdichten Verbinden eines ersten Bauteils, nämlich eines Abrollkolbens einer Rollbalg-Luftfeder mit einem zweiten Bauteil, nämlich einem im wesentlichen zylindrischen Abrollkolbenträger, auf den der Abrollkolben aufgesteckt ist und wobei zwischen den zylindrischen Außenflächenbereich des einen dieser beiden Bauteile und den zylindrischen Innenflächenbereich des anderen dieser beiden Bauteile eine Klebeschicht eingebracht wird. Die Erfindung betrifft ferner eine Abstützeinrichtung einer Rollbalg-Luftfeder, umfassend einen Abrollkolben und einen Abrollkolbenträger, die erfindungsgemäß luftdicht miteinander verbunden sind.

In der DE 195 22 459 C1 ist eine derartige Abstützeinrichtung verwendet, bei der das durch den Abrollkolben einer Rollbalg-Luftfeder gebildete Verbindungsteil über eine Klebeverbindung mit einem durch das Außenrohr eines Dämpfers gebildeten Abrollkolbenträger zu verbinden ist, der die Luftfeder zentral durchsetzt. Der Abrollkolben weist in einem oberen Bereich eine axiale Ausnehmung mit einem gegenüber dem Außendurchmesser des Abrollkolbenträgers größeren Innendurchmesser auf, wodurch zwischen dem Abrollkolben und dem Abrollkolbenträger ein Zwischenraum gebildet ist. Nach dem Entfernen der Dämpfer-Kolbenstange aus einer oberen Kolbenstangenöffnung ist durch die Kolbenstangenöffnung hindurch in den Zwischenraum eine formbare Dichtmasse einzubringen, die durch eine Druckbeaufschlagung des Luftfederinnenraumes gegen eine untere Abschrägung des Zwischenraumes gedrückt wird und sich dadurch einerseits an den Abrollkolben und andererseits an den Federträger luftdicht anlegen soll. Bei einer zweiten Ausführung ist vorgesehen, daß die formbare Dichtmasse über eine radiale Injektionsöffnung in einen radialen Zwischenraum zwischen dem Abrollkolbenträger und dem Abrollkolben eingebracht wird. Zu dieser zweiten Ausführung sind mehrere Ausführungsbeispiele angegeben, bei denen der Innendurchmesser des Abrollkolbens neben einer Hauptnut mehrere, im Längschnitt dreieckförmige Rillenausnehmungen aufweist, die wie die Hauptnut aufwendig zu fertigen sind. Besonders nachteilig ist auch, daß die in die Hauptnut mündende radiale Injektionsöffnung nach dem Einbringen der Dichtmasse in den Zwischenraum aufwendig thermisch oder durch eine plastische Verformung zu verschließen ist.

Der Erfindung liegt die Aufgabe zugrunde, ein Verfahren bzw. eine Abstützeinrichtung nach dem Oberbegriff des Anspruchs 1, bzw des Anspruchs 5 aufzuzeigen, das gegenüber dem bekannten Stand der Technik eine auf erheblich einfachere Weise herstellbare abdichtende Klebeverbindung zwischen den beiden genanten Bauteilen einer Rollbalg-Luftfeder ermöglicht und eine stabile Abstützung der besagten Bauteile aufeinander bewirkt.
Diese Aufgabe ist durch die im kennzeichnenden Teil des Patentanspruchs 1, bzw des Anspruchs 5 angegebenen Merkmalen gelöst. Vorteilhafte Weiterbildungen und Ausgestaltungen der Erfindung sind Gegenstand von Unteransprüchen.

Um eine luftdichte und stabile Abstützung des Verbindungsteiles an dem Tragteil zu erreichen, sind lediglich das Verbindungsteil oder das Tragteil mit einem zylindrischen Innenflächenbereich und das andere Teil, das Tragteil oder Verbindungsteil, mit einem zylindrischen Außenflächenbereich zu fertigen und vor dem Aufstecken des Innenflächenbereiches auf den Außenflächenbereich ein nicht ausgehärteter Klebstoff auf den Innenflächenbereich und/oder auf den Außenflächenbereich aufzutragen. Beim nachfolgenden axialen Aufstecken des Innenflächenbereiches auf den Außenflächenbereich kann der nicht ausgehärtete Klebstoff aufgrund einer fertigungstechnisch bedingten Restrauhigkeit des Innenflächenbereiches und/oder des Außenflächenbereiches zwischen den Innenflächenbereich und den Außenflächenbereich gelangen und sich bei der Aufsteckbewegung über den Umfang des Innenflächenbereiches und des Außenflächenbereiches verteilen und eine über den Umfang geschlossene Klebeschicht bilden. Anschließend kann der Klebstoff nach dem Herstellen dieser einen Preßsitzdarstellenden Verbindung selbsttätig oder unter den vom Hersteller des Klebstoffs angegebenen Bedingungen aushärten. Der ausgehärtete Klebstoff bildet eine dünne, die Stützwirkung des Tragteiles an dem Verbindungsteil nicht beeinträchtigende Schicht. Für die Klebeverbindung ist deshalb lediglich eine geringe Klebstoffmasse erforderlich. Das axiale Eindringen des nicht ausgehärteten Klebstoffes zwischen den Innenflächenbereich und den Außenflächenbereich kann dadurch verbessert sein, daß der Innenflächenbereich an seinem vor dem Aufstecken dem Außenflächenbereich zugewandten Ende und/oder der Außenflächenbereich an seinem vor dem Aufstecken dem Innenflächenbereich zugewandten Ende eine Einlaufschräge oder -abrundung aufweisen, die kostengünstig zu fertigen ist.

Drei Ausführungsbeispiele der Erfindung werden anhand einer Zeichnung näher erläutert. Es zeigen
- Figur 1a: ein erstes Ausführungsbeispiel in einer linken Längsschnitthälfte vor dem Aufstecken,
- Figur 1b: ein zweites Ausführungsbeispiel in einer rechten Längsschnitthälfte vor dem Aufstecken,
- Figur 2: die Ausführung gemäß Figur 1b mit vor dem Aufstecken spiralförmig auf den Innenflächenbereich und den Außenflächenbereich aufgetragenem Klebstoff,
- Figur 3a: das Figur 1a entsprechende Ausführungsbeispiel nach dem Aufstecken des Verbindungsteiles auf das Tragteil,
- Figur 3b: das Figur 1b entsprechende Ausführungsbeispiel nach dem Aufstecken des Verbindungsteiles auf das Tragteil,
- Figur 3c: ein drittes Ausführungsbeispiel in einer den Figuren 3a und 3b entsprechenden Ansicht,
- Figur 4a: eine vergrößerte Einzelheit des Figur 1a entsprechenden Verbindungsteiles,
- Figur 4b: eine vergrößerte Einzelheit des Figur 1b entsprechenden Verbindungsteiles,
- Figur 4c: eine vergrößerte Einzelheit des Verbindungsteiles in Figur 3c,
- Figur 5a: eine vergrößerte Einzelheit des Tragteiles in Figur 1a,
- Figur 5b: eine vergrößerte Einzelheit des Tragteiles in Figur 1b und
- Figur 5c: eine vergrößerte Einzelheit des Tragteiles in Figur 3c.

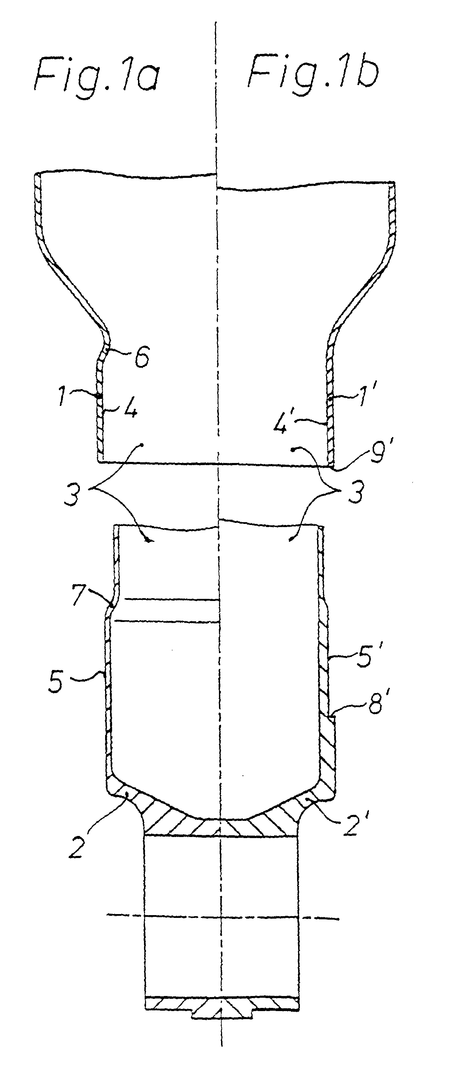

Die in Figur 1a in einer linken Längsschnitthälfte durch die Achse der Luftfeder dargestellte Abstützeinrichtung stützt ein Verbindungsteil, das durch den Abrollkolben 1 einer Rollbalg-Luftfeder an einem Fahrzeugrad gebildet ist, an einem Tragteil ab, das ein Abrollkolbenträger 2 ist, den beispielsweise ein Außenrohr eines Dämpfers bildet. An einem oberen, nicht dargestellten Außenbereich des Abrollkolbens 1 ist ein unten nach innen eingerollter Endbereich eines Rollbalges der Rollbalg-Luftfeder in Abhängigkeit vom Einfederungsweg abgestützt. Der Abrollkolben 1 und der Abrollkolbenträger 2 sind so an einer Verbindungsstelle über eine Klebeverbindung verbunden, daß der mit Druckluft beaufschlagte Innenraum 3 der Luftfeder an dieser Verbindungsstelle luftdicht abgedichtet ist. Wie der Figur zu entnehmen ist, weisen der Abrollkolben 1 einen zylindrischen Innenflächenbereich 4 und der Abrollkolbenträger2 einen zylindrischen Außenflächenbereich 5 auf.

In Figur 1b ist in einer rechten Längsschnitthälfte etwa durch die Achse der Luftfeder ein zweites Ausführungsbeispiel abgebildet, das weitgehend mit dem ersten Ausführungsbeispiel übereinstimmt. Zur Vermeidung einer wiederholten Beschreibung sind mit dem ersten Ausführungsbeispiel vergleichbare Teile mit einer gleichen Bezugszahl und einem hochgestellten Zeichen versehen. Während bei dem ersten Ausführungsbeispiel gemäß Figur 1a an dem Abrollkolben 1 eine axiale Stützfläche 6 und an dem Abrollkolbenträger 2 eine axiale Gegenstützfläche 7 ausgebildet sind und der Abrollkolben 1 mit seinem Innenflächenbereich 4 auf den Außenflächenbereich 5 des Abrollkolbenträgers 2 bis zum Anliegen der Stützfläche 6 an der Gegenstützfläche 7 axial aufschiebbar ist, ist bei dem zweiten Ausführungsbeispiel gemäß Figur 1b an dem Abrollkolbenträger 2' ein radialer Absatz 8' ausgebildet, der im Zusammenwirken mit der Stirnseite 9' des Abrollkolbens 1' beim Aufstecken des Innenflächenbereiches 4' auf den Außenflächenbereich 5' die axiale Bewegung des Abrollkolbens 1' begrenzt.

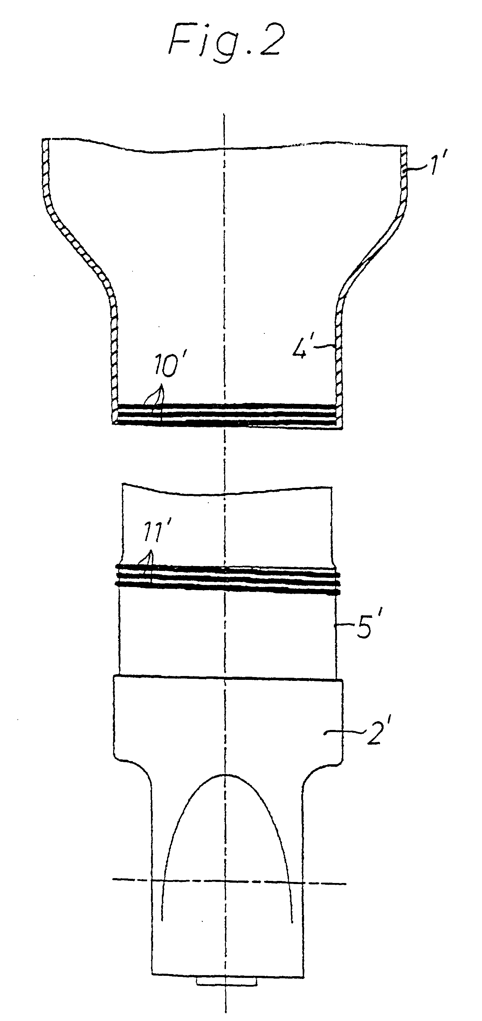

In Figur 2 ist das Figur 1b entsprechende zweite Ausführungsbeispiel ebenfalls vor dem Aufstecken mit dem von dem Abrollkolben 1' getrennten Abrollkolbenträger 2' dargestellt. In dieser Ansicht ist erkennbar, daß vor dem Aufstecken des Innenflächenbereiches 4' auf den Außenflächenbereich 5' ein nicht ausgehärteter Klebstoff 10', 11' auf den Innenflächenbereich 4' und/oder auf den Außenflächenbereich 5' jeweils spiralförmig über mehrere Umfänge aufgetragen wurde.

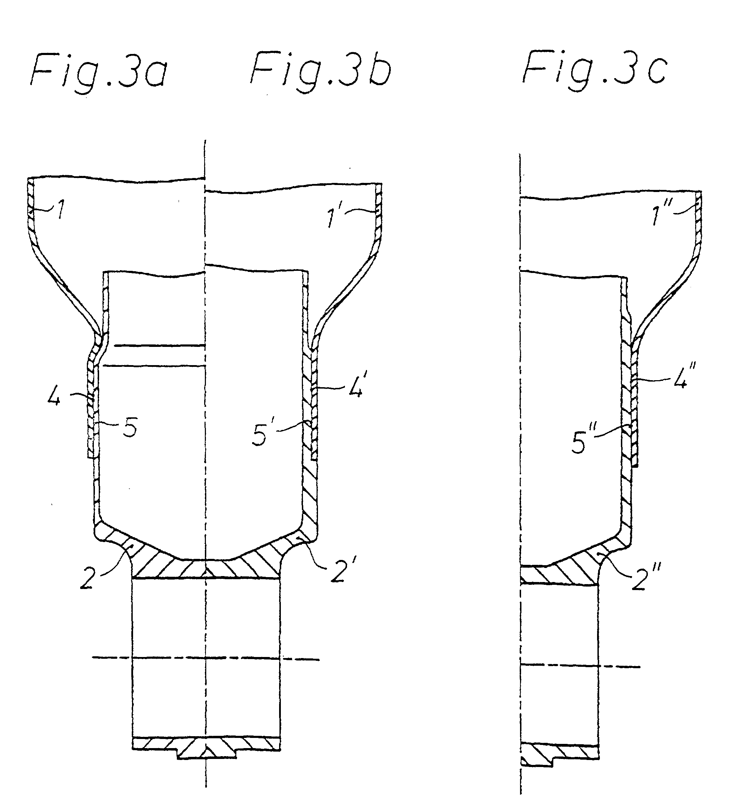

Wie in den Figuren 3a bis c dargestellt ist, können nach dem Auftragen eines nicht ausgehärteten Klebstoffes auf den betreffenden Innenflächenbereich 4, 4', 4" der Abrollkolben 1, 1', 1" und/oder auf den betreffenden Außenflächenbereich 5, 5', 5" der Abrollkolbenträger 2, 2', 2" jeweils die Abrollkolben 1, 1', 1" bis in die in den Figuren 3a, 3b und 3c dargestellten Endlagen auf den zugeordneten Abrollkolbenträger 2, 2', 2" aufgesteckt werden und danach der Klebstoff selbsttätig oder unter den vom Hersteller des Klebstoffes angegebenen Bedingungen aushärten. In den Figuren 3a und 3b sind die beiden ersten, den Ausführungen gemäß den Figuren 1a und 1b entsprechenden Ausführungsbeispiele dargestellt. In Figur 3c ist ein drittes Ausführungsbeispiel in einer den Figuren 3a und 3b entsprechenden Ansicht dargestellt, bei dem an dem Abrollkolben 1" und an dem Abrollkolbenträger 2" kein radialer Absatz zur axialen Begrenzung des Aufsteckweges vorgesehen sind. Bei allen drei Ausführungsbeispielen ist zwischen dem Innenflächenbereich 4, 4', 4" und dem betreffenden Außenflächenbereich 5, 5', 5" ein Preßsitz dargestellt. Es könnte aber auch der betreffende Abrollkolben bzw. das Verbindungsteil auf den Abrollkolbenträger bzw. auf das Tragteil thermisch aufgeschrumpft sein.

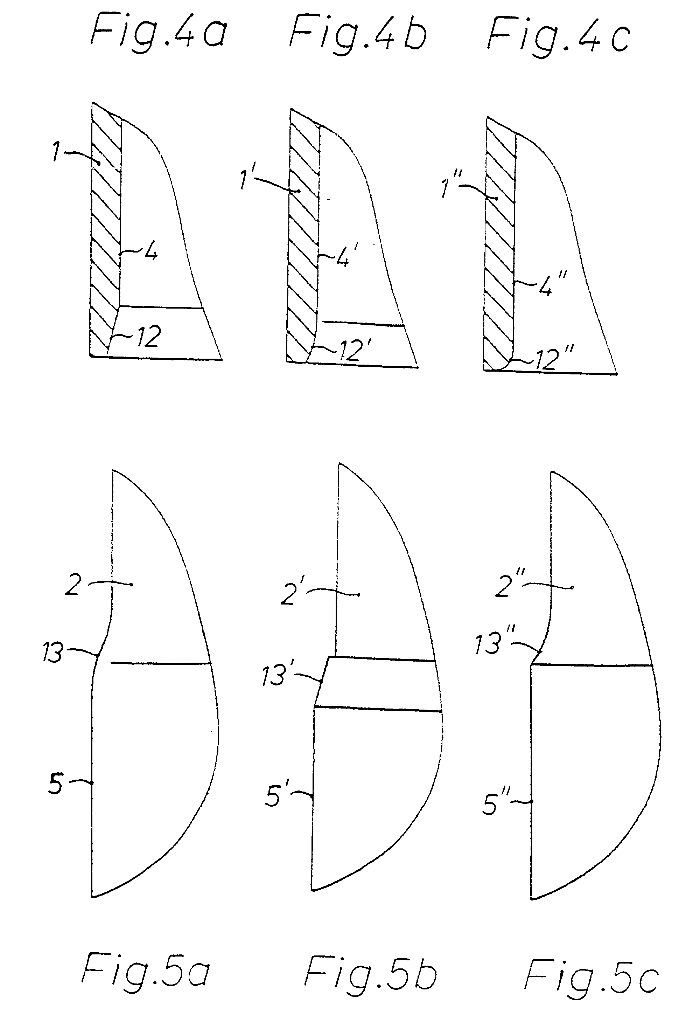

Um beim axialen Aufstecken des jeweiligen Abrollkolbens 1, 1', 1" auf den betreffenden Abrollkolbenträger 2, 2', 2" das axiale Eindringen des Klebstoffes 10', 11' zwischen den Innenflächenbereich 4, 4', 4" und den betreffenden Außenflächenbereich 5, 5', 5"zu erleichtern, sind Maßnahmen getroffen, die anhand der Figuren 4a bis 4c und 5a bis 5c nachfolgend angegeben sind.

Wie Figur 4a zu entnehmen ist, weist bei dem ersten Ausführungsbeispiel gemäß Figur 1a der zylindrische Innenflächenbereich des Abrollkolbens 1 an seinem vor dem Aufstecken dem Abrollkolbenträger zugewandten Ende eine Einlaufschräge 12 auf.

In den Figuren 4b und 4c sind an den Endbereichen der zylindrischen Innenflächenbereiche 4' bzw. 4" der Abrollkolben 1' bzw. 1" jeweils eine Einlaufabrundung 12' bzw. 12" ausgebildet.

Figur 5a ist entnehmbar, daß der Außenflächenbereich 5 des Abrollkolbenträgers 2 an seinem vor dem Aufstecken dem Innenflächenbereich des Abrollkolbens zugewandten Ende mit einer Einlaufabrundung 13 versehen ist.

Aus den Figuren 5b und 5c geht hervor, daß die Außenflächenbereiche 5' und 5" an der zuvor angegeben Stelle mit einer Einlaufschräge 13' bzw. 13" versehen sind.

Das bei den Ausführungsbeispielen als Abrollkolben ausgebildete Verbindungsteil und das bei den Ausführungsbeispielen als Abrollkolbenträger ausgebildete Tragteil können auch andere Teile sein, die in ihrer konstruktiven Ausbildung von den Ausführungsbeispielen abweichen können. Bei den Ausführungsbeispielen ist der Klebstoff spiralförmig über mehrere Umfänge des betreffenden Innenflächenbereiches und des betreffenden Außenflächenbereiches aufgetragen. Ebenso kann der Klebstoff in einer Umfangsbahn oder in mehreren, parallelen oder spiralförmig gewundenen Umfangsbahnen kontinuierlich oder bereichsweise voneinander abgesetzt auf den Innenflächenbereich und/oder den Außenflächenbereich aufgetragen sein. Ist der nicht ausgehärtete Klebstoff beispielsweise in Klebstoffportionen bereichsweise in einer Umfangsbahn oder in mehreren Umfangsbahnen verteilt angeordnet, kann es erforderlich sein, daß beim Aufstecken des Verbindungsteiles auf das Tragteil das Verbindungsteil und/oder das Tragteil gegeneinander zu verdrehen sind, damit der Klebstoff eine über den Umfang des Innenflächenbereiches und des Außenflächenbereiches geschlossene Klebstoffschicht bildet, wenn der Innenflächenbereich vollständig auf den Außenflächenbereich aufgeschoben ist. Ist der Abrollkolben bzw. das Verbindungsteil auf den Abrollrollkolbenträger bzw. das Tragteil thermisch aufgeschrumpft, so kann der nicht ausgehärtete Klebstoff in besonders einfacher Weise vor dem Ausschrumpfen auf eine geschlossene Umfangsfläche des Innenflächenbereiches und/oder des Außenflächenbereiches aufgetragen werden.

## Patentansprüche

1. Verfahren zum luftdichten Verbinden eines ersten Bauteils, nämlich eines Abrollkolbens (1, 1', 1") einer Rollbalg-Luftfeder mit einem zweiten Bauteil, nämlich einem im wesentlichen zylindrischen Abrollkolbenträger (2, 2', 2"), auf den der Abrollkolben (1, 1', 1 ") aufgesteckt ist und wobei zwischen den zylindrischen Außenflächenbereich (5, 5', 5") des einen dieser beiden Bauteile und den zylindrischen Innenflächenbereich (4, 4', 4") des anderen dieser beiden Bauteile eine Klebeschicht (10', 11') eingebracht wird,
**dadurch gekennzeichnet, dass** vor dem Aufstecken des einen Bauteils auf das andere Bauteil ein noch nicht ausgehärteter Klebstoff auf den Innenflächenbereich (4, 4', 4") des einen Bauteils und/oder auf den Außenflächenbereich (5, 5', 5") des anderen Bauteils aufgetragen wird, der beim axialen Aufstecken zwischen den Innenflächenbereich (4, 4', 4") und den Außenflächenbereich (5, 5', 5") gelangt und über den Umfang des Innenflächenbereiches (4, 4', 4") und des Außenflächenbereiches (5, 5', 5") eine geschlossene Klebeschicht (10', 11') bildet, die nach dem Herstellen dieser einen Preßsitz darstellenden Bauteil-Verbindung selbsttätig oder unter vom Hersteller des Klebstoffs angegebenen Bedingungen aushärtet.

2. Verfahren nach Anspruch 1,
**dadurch gekennzeichnet, daß** der noch nicht ausgehärtete Klebstoff (10', 11') vor dem Aufstecken des Innenflächenbereiches (4, 4', 4") auf den Außenflächenbereich (5, 5', 5") in mehreren axial nebeneinander liegenden Umfangsbahnen kontinuierlich oder in Klebstoffportionen auf den Innenflächenbereich (4, 4', 4") und/oder auf den Außenflächenbereich (5, 5', 5") aufgetragen wird.

3. Verfahren nach Anspruch 1,
**dadurch gekennzeichnet, daß** der noch nicht ausgehärtete Klebstoff (10', 11') vor dem Aufstecken des Innenflächenbereiches (4, 4', 4") auf den Außenflächenbereich (5, 5', 5") spiralförmig auf den Innenflächenbereich (4, 4', 4") und/oder auf den Außenflächenbereich (5, 5', 5") aufgetragen wird.

4. Verfahren nach einem der vorangegangenen Ansprüche,
**dadurch gekennzeichnet**, der Preßsitz zwischen den beiden Bauteilen durch thermisches Aufschrumpfen erzeugt wird, wobei vor dem Aufschrumpfen der nicht ausgehärtete Klebstoff auf eine geschlossene Umfangsfläche des Innenflächenbereiches (4, 4', 4") und/oder des Außenflächenbereiches (5, 5', 5") aufgetragen wird.

5. Abstützeinrichtung einer Rollbalg-Luftfeder, umfassend einen Abrollkolben (1, 1', 1") und einen Abrollkolbenträger (2, 2', 2"), die gemäß einem Verfahren nach einem der Ansprüche 1 - 4 luftdicht miteinander verbunden sind, **dadurch gekennzeichnet, daß** ein zylindrischer Innenflächenbereich (4, 4', 4") des einen dieser beiden Bauteile unter Zwischenlage einer Klebeschicht (10', 11') auf einen zylindrischer Außenflächenbereich (5, 5', 5") des anderen dieser beiden Bauteile unter Bildung eines Preßsitzes aufgesteckt ist.

6. Abstützeinrichtung nach Anspruch 5,
**dadurch gekennzeichnet, daß** der Innenflächenbereich (4, 4', 4") an seinem vor dem Aufstecken dem Außenflächenbereich (5, 5', 5") zugewandten Ende und/oder der Außenflächenbereich (5, 5', 5") an seinem vor dem Aufstecken dem Innenflächenbereich (4, 4', 4") zugewandten Ende eine Einlaufschräge (12, 13, 13') oder eine Einlaufabrundung (12', 12", 13) aufweist.

7. Abstützeinrichtung nach Anspruch 5,
**dadurch gekennzeichnet, daß** der Innenflächenbereich (4, 4') des einen Bauteils eine axiale Stützfläche (6, 9') aufweist, mit der sich dieses auf einer axialen Gegenstützfläche (7, 8') des anderen Bauteils abstützt, wenn das eine Bauteil vollständig auf das andere Bauteil aufgesteckt ist.

## Claims

1. A method of forming an airtight connection between a first component, that is a piston (1, 1', 1") for uncoiling a cushion-type pneumatic spring, to a second component, that is a substantially cylindrical piston holder (2, 2', 2") on which the uncoiling spring (1, 1', 1") is mounted, wherein an adhesive layer is inserted between the cylindrical outer surface area (5, 5', 5") of one of the said two components and the cylindrical inner surface area (4, 4', 4") of the other component, **characterised in that** before the one component is fitted on to the other component, a not-yet set plastics is applied to the inner surface area (4, 4', 4") of one component and/or to the outer surface area (5, 5', 5") of the other component and penetrates between the inner surface area (4, 4', 4") and the outer surface area (5, 5', 5") during axial fitting-on and forms a continuous adhesive layer (10', 11') over the periphery of the inner surface area (4, 4', 4") and the outer surface area (5, 5', 5") and after the said connection has been made in the form of a press fit, the layer of adhesive sets automatically or under the conditions prescribed by the manufacturer.

2. A method according to claim 1, **characterised in that** before the inner surface area (4, 4', 4") has been fitted on to the outer surface area (5, 5', 5") the not-yet set adhesive (10', 11') is applied to the inner surface area (4, 4', 4") and/or to the outer surface area (5, 5', 5") continuously or in portions along a number of axially adjacent peripheral tracks.

3. A method according to claim 1, **characterised in that** before the inner surface area (4, 4', 4") has been fitted on the outer surface area (5, 5', 5") the not-yet set adhesive (10', 11') is applied in a spiral to the inner surface area (4, 4', 4") and/or to the outer surface area (5, 5', 5").

4. A method according to any of the preceding claims, **characterised in that** the press fit between the two components is made by thermal shrinking-on, wherein before shrinking-on, the not-set plastics is applied to a continuous peripheral surface of the inner surface area (4, 4', 4") and/or the outer surface area (5, 5', 5").

5. A device for supporting a cushion-type pneumatic spring, comprising an uncoiling piston (1, 1', 1") and a piston-holder (2, 2', 2") which are connected in air-tight manner by a method according to any of claims 1 - 4, **characterised in that** a cylindrical inner surface area (4, 4', 4") of one of the said two components is fitted on a cylindrical outer surface area (5, 5', 5") of the other component in a press fit, with interposition of an adhesive layer (10', 11').

6. A support device according to claim 5, **characterised in that** an inlet slope (12, 13, 13') or an inlet round portion (12', 12", 13) is formed on the inner surface area (4, 4', 4") at the end thereof facing the outer surface area (5, 5', 5") before fitting on and/or on the outer surface area (5, 5', 5") at the end thereof facing the inner surface area (4, 4', 4") before fitting on.

7. A support device according to claim 5, **characterised in that** the inner surface area (4, 4') of one component has an axial bracing surface (6, 9') via which it bears on an axial mating bracing surface (7, 8') of the other component when the one component has been completely fitted on the other component.

## Revendications

1. Procédé pour la liaison hermétique d'un premier composant, à savoir un piston de déroulage (1, 1', 1") d'un ressort pneumatique à soufflet, avec un second composant, à savoir un support de piston de déroulage essentiellement cylindrique (2, 2', 2") sur lequel le piston de déroulage (1, 1', 1") est fixé, avec une couche adhésive (10', 1') appliquée entre la zone de surface extérieure cylindrique (5, 5', 5") de l'un de ces deux composants et la zone de surface intérieure (4, 4', 4") cylindrique de l'autre de ces deux composants,
**caractérisé en ce qu'**
avant la fixation d'un composant sur l'autre composant, une substance adhésive qui n'a pas encore durci est appliquée sur la zone de surface intérieure (4, 4', 4") d'un composant et/ou sur la zone de surface extérieure (5, 5', 5") de l'autre composant, qui se retrouve entre la zone de surface intérieure (4, 4', 4") et la zone de surface extérieure (5, 5', 5") lors de la fixation axiale, et forme sur toute la circonférence de la zone de surface intérieure (4, 4', 4") et la zone de surface extérieure (5, 5', 5") une couche adhésive fermée (10', 11') qui durcit toute seule ou dans les conditions indiquées par le fabricant de la substance adhésive après réalisation de cette liaison de composants, en formant un ajustage serré.

2. Procédé selon la revendication 1,
**caractérisé en ce que**
la substance adhésive (10', 11') qui n'a pas encore durci est appliquée de manière continue avant la fixation de la zone de surface intérieure (4, 4', 4") sur la zone de surface extérieure (5, 5', 5") en plusieurs tracés circonférentiels situés axialement les uns à côté des autres, ou par portions de substance adhésive sur la zone de surface intérieure (4, 4', 4") et/ou sur la zone de surface extérieure (5, 5', 5").

3. Procédé selon la revendication 1,
**caractérisé en ce que**
la substance adhésive (10', 11') qui n'a pas encore durci est appliquée en spirale sur la zone de surface intérieure (4, 4', 4") et/ou la zone de surface extérieure (5, 5', 5") avant la fixation de la zone de surface intérieure (4, 4', 4") sur la zone de surface extérieure (5, 5', 5").

4. Procédé selon l'une quelconque des revendications précédentes,
**caractérisé en ce que**
l'ajustage serré entre les deux composants est produit par rétraction thermique, moyennant quoi avant la rétraction, la substance adhésive qui n'a pas encore durci est appliquée sur une surface circonférentielle fermée de la zone de surface intérieure (4, 4', 4") et/ou de la zone de surface extérieure (5, 5', 5").

5. Arrangement de support d'un ressort pneumatique à soufflet comprenant un piston de déroulage (1, 1', 1") et un support de piston de déroulage (2, 2', 2") qui, selon un procédé selon l'une quelconque des revendications 1 à 4, sont reliés ensemble hermétiquement,
**caractérisé en ce qu'**
une zone de surface intérieure (4, 4', 4") d'un de ces deux composants est fixée sur une zone de surface extérieure (5, 5', 5") cylindrique de l'autre de ces deux composants par application d'une couche intermédiaire d'une substance adhésive (10', 11') en formant un ajustage serré.

6. Arrangement de support selon la revendication 5,
**caractérisé en ce que**
la zone de surface intérieure (4, 4', 4") au niveau de son extrémité tournée vers la zone de surface extérieure (5, 5', 5") avant la fixation et/ou la zone de surface extérieure (5, 5', 5") au niveau de son extrémité tournée vers la zone de surface intérieure (4, 4', 4") avant la fixation présentent une inclinaison d'entrée (12, 13, 13') ou un arrondi d'entrée (12', 12", 13).

7. Arrangement de support selon la revendication 5,
**caractérisé en ce que**
la zone de surface intérieure (4, 4') de l'un des composants présente une surface de soutien axiale (6, 9') avec laquelle celui-ci s'appuie sur une surface de soutien correspondante axiale (7, 8') de l'autre composant lorsque le composant est entièrement fixé sur l'autre composant.
